# EUROPEAN PATENT APPLICATION

(11) **EP 2 221 705 A1**
(43) Date of publication of application: **25.08.2010**
(21) Application number: 09425044.6
(22) Date of filing: 09.02.2009
(51) Int. Cl.: G05F 1/24, H02M 5/293

(54) **Programmable AC voltage regulator and stabilizer system, particularly for optimized control of lighting fixtures with fluorescent lamps and the like**

(71) Applicant: Bob Hammer Systems Solutions S.A., 6901 Lugano (CH)
(72) Inventor: Ranzenigo, Emilio, 22070 Limido Comasco (CO) (IT); Petrali, Roberto, 20126 Milano (IT); Caputo, Augusto, 20142 Milano (IT)
(74) Representative: Perani, Aurelio

(57) **Abstract**

A programmable AC voltage regulator and stabilizer system, wherein an AC-to-AC converter (35) supplied with the power mains, supplies a variable regulating voltage, obtained by means of a single pair of solid state bidirectional switches (36, 38) which are intermittently closed at high frequency and in a mutually exclusive manner, to a primary winding (44) of a transformer (43) having a secondary (46) in series with the load, the series of the load and the secondary winding being supplied with the power mains voltage, so that the voltage actually applied to the load is equal to the power mains voltage decreased or increased by a voltage corresponding to the variable regulating voltage divided by the primary to secondary turns ratio of said transformer (43), the harmonic current/voltage distortion and the power dissipation introduced by the regulator system being minimized.

The system comprises a supervision unit (28) and a secondary control unit (31) which intelligently cooperate for maximized operational reliability and safety.

## Description

The present invention relates to a programmable AC voltage regulator and stabilizer, particularly for optimized control of lighting fixtures with fluorescent lamps and more generally gas-discharge lamps, which minimizes disturbances into the line.

This type of lamps is known to require a predetermined ignition voltage and, once ignition has occurred, after a warm-up time which depends, amongst other things, upon environment temperature, the supply voltage may be considerably reduced, as long as it is maintained above a predetermined minimum value required to prevent extinction.

It is also known that the luminous flow of this type of lamps is not directly proportional to the supply voltage and the absorbed power and that maximum luminous efficiency is obtained within a range of supply voltages below the ignition voltage.

Within such range the luminous flux may be adjusted as needed, by changing the supply voltage.

Finally, overvoltages are known not to involve any considerable increase of the luminous flux and to considerably reduce lamp life.

Therefore, control systems have been provided for supplying such types of lamps with a regulated voltage obtained from the power line voltage, which is modulated for ensuring optimized lamp ignition and warm-up, and then reduced and maintained constant, regardless of the line voltage, to obtain a predetermined luminous flux (possibly time dependent, according to appropriate schedules) in optimal efficiency conditions.

One example of this type of systems is disclosed in Patent EP0753986.

In these systems, the regulated supply voltage for the lighting fixtures is obtained by an autotransformer with multiple taps, selectively connected to the output one at a time, by means of switches controlled by control and supervision electronics.

These systems suffer from a number of drawbacks: first, voltage can be only regulated by discrete values, with a resolution that depends on the number of switches being used, although such number may be reduced, by appropriate arrangements; secondly, the switch devices shall be sized in such a manner as to be able to withstand the whole load current, which is of the order of tens of amperes.

In view of achieving a quasi infinite resolution of AC voltage regulation, waveform chopping regulator systems have been provided, which have a higher frequency than the line, of the order of tens of Khz (typically 20 KHz).

With a continuous variation of the conduction "duty cycle" of switch devices, which must be of solid state type and with controlled bidirectional conduction characteristics, voltage may be continuously regulated with a virtually infinite resolution.

Examples of these regulator systems are disclosed in AT171987, IT1324978 and US5942884.

Unfortunately, the use of solid state switch devices, which involve some voltage drop even in the conduction state (of the order of 2ö4V for power switches, with an additional voltage drop of the order of 0,8ö1V on at least one diode arranged in series therewith), introduces some distortion in the generated waveform, which is reflected on the load current and transfers to the power line as continuous noise, mainly of third harmonic type, whose amount is proportional to the whole load.

This drawback never occurs in the above mentioned regulator systems, which are equipped with an autotransformer, with electromechanical switches (relays) that cause actually no voltage loss when closing.

In these systems, disturbances have a transient nature and only occur during relay switching.

Concerning the second problem, in order to allow the use of switch devices having a lower power than that required to be supplied to the load, a regulating transformer has been long known to be used, which has a secondary winding in series with the load and a primary winding supplied with a control voltage, generally ranging from 0 to 100% of the available line voltage, obtained by selective and controlled connection, via electromechanical or solid state switches, to the taps of an autotransformer supplied with power line voltage.

One example of these systems is disclosed in EP1318702, which proposes to reduce the number of switches by using a reversing switch to reverse the voltage applied to the primary winding of the regulating transformer and disposing the autotransformer taps and the electromechanical switches in a particular arrangement to cause selective connection to the different taps.

This will allow voltage regulation to occur with an acceptable resolution with a smaller number of low cost, low power switches (relays).

In view of achieving a substantially continuous regulation, solutions have been proposed in which the primary winding of the regulating transformer, with the secondary in series with the load, is supplied with a voltage obtained from the AC power line voltage by high frequency chopping (20ö40 Khz) with the well known Pulse Width Modulation technique (PWM).

Examples of this regulator system are disclosed in US5,545,971 and US6,020,726.

This regulator system only requires the use of two pairs of switches, which must be of the solid state type with controlled bidirectional conduction characteristics (that may be obtained by a combination of multiple semiconductor devices).

Each pair of switches, in series arrangement, is connected to the AC voltage source and the intermediate node of the two pairs is connected to the each of the ends of the primary winding of the regulating transformer respectively.

By this arrangement, the primary winding of the regulating transformer may be supplied with vectorially opposed AC voltages, and either a step-up or boost or a step-down or buck supply voltage function may be obtained, without using any reversing device.

In spite of its apparent simplicity, this system still has certain drawbacks: first, the four switch devices and their respective drive circuits have a high cost.

Secondly, the voltage drops in solid state switches and in the diodes associated therewith create a regulation dead zone of the order of ±6ö10V corresponding to the condition in which the instantaneous voltage value is close to zero and twice the one considered in the above described solution (direct regulation).

Once again, some distortion is introduced in the regulated voltage and is reflected in the load current, although attenuated in proportion to the turns ratio of the regulating transformer (generally falling in a range of 3 to 8, as needed), and is transferred into the power line.

This also involves a non negligible power loss, which should be desirably reduced, particularly in applications (such as optimized control of lighting fixtures) in which the regulator is employed to achieve power savings (in addition to ensuring a longer lamp life).

The present invention largely obviates the above drawbacks and provides a high-performance regulating system which minimizes the disturbances introduced by the load into the power line as required by applicable regulations (EN610000-3-12) and which uses a small number of solid state power switches.

These and other advantages are achieved with a programmable AC voltage regulator and stabilizer system, particularly for optimized control of lighting fixtures as defined in the annexed claims.

In short, the main aspect of the invention consists in using a voltage regulator like the one disclosed in IT1324978 for indirect regulation of a supply voltage to a load using a transformer with the secondary winding arranged in series with the load and with the primary winding powered by the regulator.

Thus, according to the turns ratio of the transformer, the actually regulated power is reduced, as well as the losses and the disturbances generated by the regulator system.

Furthermore, by simply reversing the connections of the voltage regulator to the primary of the regulating transformer (using an electromechanical reversing switch), the regulating function may be converted from "step down" to "step up" types and vice versa.

This is possible because the regulator as described in IT1324978 can operate in all four quadrants that define the phase relation between the supply voltage and the current being delivered.

Also, in the special application of optimized control of lighting fixtures the voltage regulating range is asymmetric with respect to the line voltage and extends from 170V to 240V, special arrangements are provided to exploit such asymmetry to further reduce harmonic distortion and power losses and to ensure safer operation.

Finally, for maximized operational safety, the system is controlled by a microprocessor supervision unit which cooperates with a secondary control unit, also having an "intelligent" microprocessor-based operation, so that in case of failure or malfunction of either unit, the other one can take appropriate actions.

The features and advantages of the invention will be more apparent from the following description of a preferred embodiment and annexed drawings, in which:
- Figure 1 shows the wiring diagram of a first type of prior art voltage regulator;
- Figure 2 shows a first embodiment of a prior art solid state bidirectional switch for use in the regulator of Figure 1;
- Figure 3 shows a second embodiment of a prior art solid state bidirectional switch for use in the regulator of Figure 1;
- Figure 4 shows a prior art variant of the switch of Figure 3;
- Figure 5 shows, in time diagram, a wave of the mains voltage wave supplied to the regulator of Figure 1, the voltage pulses applied by the voltage regulator to an output filter and the voltage waveform at the output thereof;
- Figure 6 shows, in time diagram, the current developed on a resistive load by the output voltage of the regulator of Figure 1;
- Figure 7 shows, in time diagram, the main harmonic components of the current of Figure 6;
- Figure 8 shows the wiring diagram of a second type of prior art voltage regulator;
- Figure 9 is a partial block wiring diagram of a voltage regulator system of the present invention;
- Figure 10 is a schematic view of a secondary control unit of the regulator system of Figure 9;
- Figure 11 shows the wiring diagram of the power switches and the voltage regulators used in the system of Figure 9 and their respective drive circuits;
- Figure 12 is a schematic view of a supervision unit of the system of Figure 9;
- Figure 13 is an exemplary time diagram of an ignition/switch off cycle for a set of lamps controlled by the system of Figure 9;
- Figure 14 is a schematic view of a first variant embodiment of the system of Figure 9;
- Figure 15 is a schematic view of a second variant embodiment of the system of Figure 9.

Certain general preliminary considerations will be useful for a better understanding of the invention.

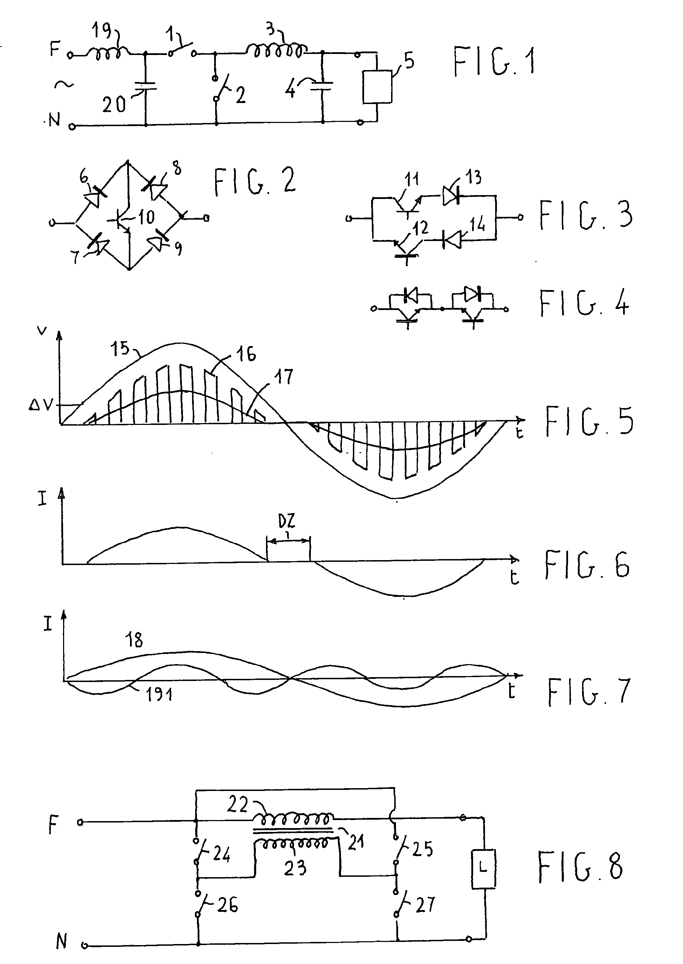

Figure 1 shows the wiring diagram of a prior art AC voltage regulator, for instance the one disclosed in AT171987.

The regulator is essentially composed of two solid state bidirectional switches 1, 2, one inductor 3 and one capacitor 4, which form an output low-pass LC filter.

By closing the switch 1 when the switch 2 is open, a current is initiated which passes through the inductor 3, charges the capacitor 4 and is supplied to the load 5.

By opening the switch 1 and simultaneously closing the switch 2, the current that runs through the inductor 3 may run out, thereby charging the capacitor 3 and being supplied to the load.

This operation is periodically repeated with a frequency higher than the mains frequency, and with a "duty cycle", i.e. the ratio of the closing time of the switch 1 to the repetition period, that determines the voltage supplied to the load.

In practice, solid state bidirectional switches are obtained by the configurations of Figures 2, 3 and 4.

In Figure 2, the switch consists of a diode bridge rectifier 6, 7, 8, 9 which powers a solid state switch 10.

When high currents and voltages are being used (of the order of tens of amperes and hundreds of Volts), such switch, which is represented as a transistor, is preferably an IGBT (Insulated Gate Bipolar Transistor) due to its low switching losses, its low voltage drop in the conducting state and its simple voltage driving capability with a minimum power.

Nevertheless, it shall be noted that, when the device is in the conducting state, the voltage drop is the sum of the voltage drop across two diodes in series and the inherent voltage drop of the switch and (assuming an IGBT is used) will be in the order of 4ö6V as a whole.

For this reason, and due to a simpler switching arrangement of the two switch devices as compared with the configuration of Figure 1, the configuration of Figure 3 is preferred.

In Figure 3, the bidirectional switch is composed of two solid state switches 11, 12 each in series with a diode 13, 14. The two switches are connected antiparallel to each other, i.e. with opposite conduction directions.

Here again the switches 11, 12, represented as transistors, may be IGBT for the above mentioned reasons.

The bidirectional switches of Figure 4 have a totally equivalent structure, and will not be further explained herewith: IGBT with an antiparallel-connected diode are available and manufactured, for example, by ABB IXYS.

It will be apparent that the voltage drop in the switch device, when the latter is in the conducting state, is equal to the sum of the voltage drop across the series of the IGBT and a single diode, i.e. of the order of 3ö5V.

The time diagrams of Figures 4, 5, 6 show the implications of this voltage drop for the voltage and current waveforms at the output of the regulator of Figure 1, whose operation is based on intermittent application of the line voltage to the inductor 3, with a constant frequency (20 KHz by way of indication), much higher than the line frequency and a constant "duty cycle" within a period of the mains frequency but changing with time according to regulation needs.

The switches of the configurations of Figure 3 or 4 are closed and opened as clearly explained in US 5,942,884.

Figure 5 shows the sine waveform 15 of the input voltage to the regulator, the intermittent sine waveform 16 of the voltage applied to the inductor 3 and the waveform 17 at the output of the regulator due to the integrating function of the LC filter composed of the inductor 3 and the capacitor 4.

The output voltage 17 is only roughly sinusoidal, with a maximum value and an effective value which depend on the "duty cycle" of the voltage pulses applied to the inductor 3 relative to the pulse repetition period.

It should be incidentally noted that the maximum achievable output voltage value is equal to the line voltage, less the voltage drop in the switches.

This reduction adds to the inevitable reduction imposed by safety reasons (preventing the regulator switches from being simultaneously closed, even transiently) that the duty cycle shall not exceed 98ö99%.

Figure 5 also shows that, at instantaneous input voltage values below Δv, corresponding to the voltage drop across switches 1 and 2, no voltage may be applied to the inductor 3.

Therefore, a time period or dead zone DZ is created, in which no voltage is applied to the inductor 3 and is available at the output of the regulator.

As a result, the output current from the regulator, assuming that the load is purely resistive, will have a pattern as shown in Figure 6 (the same pattern, offset in time, would be obtained in case of a load with a reactive component).

The waveform of Figure 6 mainly corresponds to the sum of a fundamental harmonic 18 and a third harmonic 191 of considerable amplitude, both shown in Figure 7.

Therefore, the load current is affected by a considerable distortion which will be transferred as noise to the power line.

Such noise is proportional to the load current and cannot be actually filtered due to its low frequency (150 Hz) comparable to the line frequency.

The LC filter composed of the inductor 19 and the capacitor 20 (see Fig. 1) at the input of the regulator is only used to filter out the noise caused by the switching frequency of switches.

Another drawback of this regulating system is given by the non negligible losses caused by the voltage drop in the switches which, with an input voltage of 230 V, is of the order of 2ö3% of the regulated power.

Some reduction of the noise and losses caused by voltage drops across switches may be obtained using a voltage regulator as schematically shown in Figure 8 and, as disclosed in US 6,020,726 and US 5,545,971.

Further such voltage regulator allows for both "step up" and "step down" regulation, which is not allowed with the regulator of Figure 1, unless inlets and outlets are exchanged.

In Figure 8, the voltage supplied to the load L is indirectly regulated with the help of a regulating transformer 21, whose secondary 22 is connected in series with the load and whose primary 23 is connected to the power line by four solid state bidirectional switches (preferably of the type as shown in Figures 3 and 4) 24, 25, 26, 27.

Assuming that N (e.g. N=4) is the primary to secondary turns ratio of the regulating transformer 21, the regulating current is 1/N of the current supplied to the load, but the voltage drop across the switch devices doubles as compared with the previous case.

As a result, the amount of noise and losses caused by the voltage drop across the switches decreases to approximately 2/N with respect to the previous case.

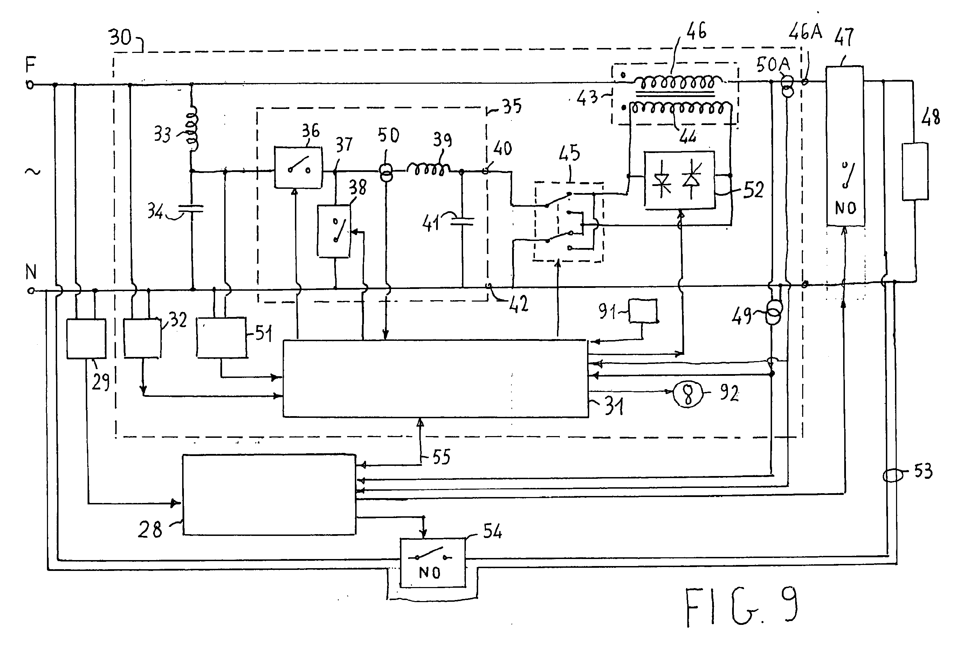

According to the present invention, a more considerable reduction of the noise and dissipated power in the switch devices is achieved by the regulator system as schematically shown in Figure 9, which is designed to afford additional advantages in terms of modularity, safe operation and reliability.

The system comprises:
- a microprocessor supervision unit 28, with its ALU power supply 29 (connected between the phase F and the neutral N of the power line voltage) and at least one power module 30 controlled by the supervision unit 28.

Multiple, e.g. 3 power modules, each connected to one of the phases (or between a pair of phases) of a three-phase power line, may be controlled by a common supervision unit.

The power module 30 is in turn composed of a plurality of components, and particularly comprises:
- a microprocessor control unit 31, with its ALU power supply 32, connected between the phase F and the neutral N of the power line;
- a low-pass input filter, composed of an inductor 33 and a capacitor 34, which are connected as is known between the phase and the neutral N of the power line;
- an AC-AC converter unit 35 which is composed, as already shown in Figure 1, of a first solid state bidirectional switch 36, connected between the phase F of the power line and a node 37, a second solid state bidirectional switch 38 connected between the node 37 and the neutral N of the power line, an inductor 39 connected between the node 37 and a first output terminal 40 of the converter unit 35 and a capacitor 41 connected between the first output terminal 40 and a second output terminal 42, which is in turn connected to the neutral N of the power line;
- a transformer 43 having its primary winding 44 connected to the output terminals 40, 42 (optionally with the interposition of an electromechanical reversing switch 45 for reversing the connection between the terminals 40, 42 and the terminals of the primary winding 44 of the transformer) and its secondary winding 46 connected on one side, to the phase F of the power mains and on the other side to an output terminal of the power module. The black dots at one end of both windings conventionally identify the orientation of the applied voltage and induced voltage vectors.

A first output terminal 46A of the power module is connected to the load 48 with an electromechanical contactor 47 interposed therebetween. The second output terminal, connected to the neutral N, is directly connected to the load.

The contactor 47, which is of the normally open type, is driven into the closed state by the supervision unit 28.

The power module 30 further comprises an instrument transformer 49 for measuring the output voltage applied to the load, an instrument transformer 50A for measuring the current supplied to the load (when the contactor 47 is closed), an instrument transformer 50 for measuring the current that flows through the inductor 39 (and hence either of the switches 36, 38) and a circuit 51 (POL DET) for detecting the instantaneous polarity of the AC power voltage applied to the converter unit 35.

Also, the output signals from the transformers 49 and 50A are applied to the input of the supervision unit 28 which incidentally communicates with the secondary control unit 31 via a communication port 55 (such as a RS485 serial port).

The supervision unit 28 determines all the electrical quantities at the output of the power module (voltage, current, active power, reactive power, apparent power, cosΦ, energy).

Finally, the power module 30 comprises a bypass or short circuit switch device 52 (preferably a solid state bidirectional switch) for the primary winding 44 of the regulating transformer 43, a temperature sensor 91 of the power module (particularly of switches 36, 38) and a cooling fan 92.

The switch 52, which is of the normally closed type, is driven into the open state by the secondary control unit 31.

The regulator system is finally completed by a bypass circuit 53 which directly supplies line voltage to the load 48 when an electromechanical power switch (contactor) 54, which is normally open, is controlled into the closed state by the supervision unit 28 in case of failure or abnormal operation of the power module 30.

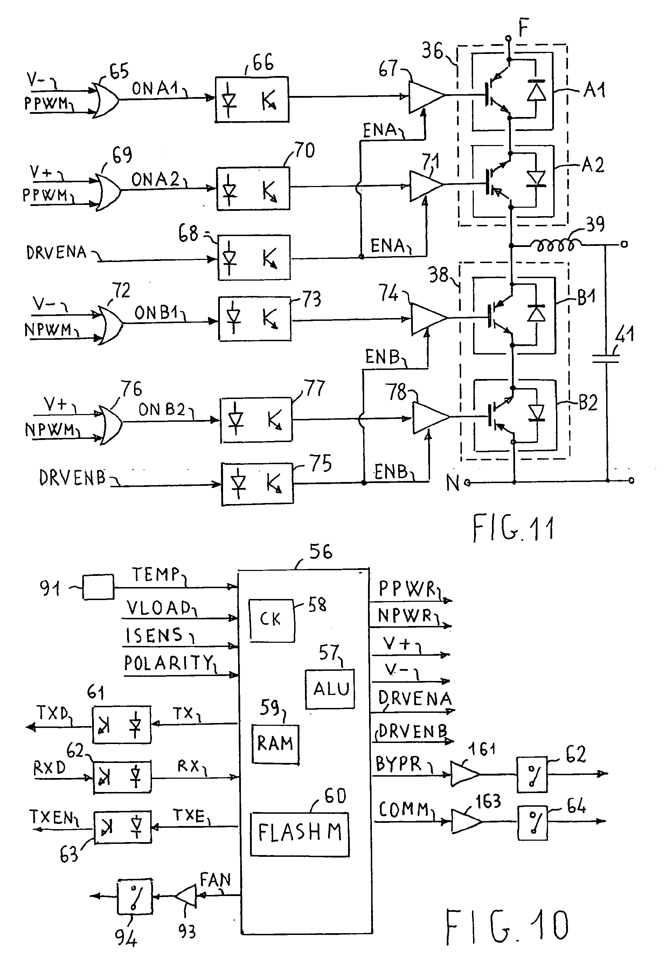

Figure 10 schematically shows the structure of the secondary control unit 31 of Figure 9.

The latter is essentially composed of a microprocessor 56 (such as the 16 bit microprocessor DSPC30F202 manufactured by Microchip Tecnology Inc.) which incorporates an arithmetic-logic unit (ALU) 57, a clock signal (CK) generating oscillator 58, a read-write RAM memory 59, a rewritable FLASHM permanent memory 60 and a plurality of analog or digital input/output ports, to receive and transmit signals and exchange messages.

Particularly the microprocessor 56 has three input ports for respectively receiving:
- an analog VLOAD signal representative of the voltage generated by the power module 30 and measured by the transformer 49 (see Fig. 9),
- an (analog) ISENS signal representative of the current that flows through the inductor 39 (see Fig. 9) and measured by the current transformer 50,
- a (digital) POLARITY signal generated by the detecting circuit 51 (see

Fig. 9) and indicative of the instantaneous polarity of the voltage supplied to the converter unit 35.

For these signals the galvanic insulation between the power section and the control section (microprocessor) is inherently ensured by the instrument transformers and an optoelectronic device, contained in the detector circuit 51.

A fourth input port receives a temperature signal TEMP from the temperature sensor 91 (see Fig. 9).

Three (digital) terminals identified by the references TX, RX, TE form a serial communication port (55, see Fig. 9) with a supervision unit 28.

Advantageously, galvanic insulation between the two units is ensured by optoelectronic insulators 61, 62, 63 also for this port.

According to the instructions received through the serial communication port and according to the input signals VLOAD, ISENS, POLARITY, TEMP the microprocessor 56 produces at its output control signals for the switches 36, 38 of the AC-AC converter 35 (see Fig. 9), the bypass or short circuit switch 52, the switch 45 (if any) and the fan 92.

These signals are:
- PPWM: it is a square wave logic signal having a predetermined frequency (20 KHz) and a "duty cycle" which is adjustable with a high resolution, of the order of thousands of values, and is gradually variable (from period to period of the line frequency or multiples of such period) as a function of the deviation between a desired output voltage that provides a "set point" and the measured VLOAD voltage.

Gradual duty cycle variation is determined by the microprocessor according to a variable parameter preset in the memory 60 of the secondary control unit by the supervision unit (or failing this according to a default parameter) and representative of a desired ramp slope.
- NPWM: it is a square wave signal complementary to PPWM, i.e. at logic level 1 when PPWM is at logic level 0, and at logic level 0 when PPWM is at logic level 1.
- V+: it is a square wave signal, obtained by analyzing the input POLARITY signal, which is asserted when the value of instantaneous AC voltage supplied to the converter unit 35 is positive and deasserted when it is negative. The frequency of the V+ signal is obviously equal to the line frequency (50/60 Hz).
- V-: this signal is complementary to V+.
- DRVENA: it is a signal for enabling or allowing actuation of the switch 36 (see Fig. 9) by the signals V+, V-, and PPWM.
- DRVENB: it is a signal for allowing actuation of the switch 38 (see Fig. 9) by the signals V+, V-, and PPWM.
- BYPR: it is a signal which, when asserted, actuates through a driver 161 a normally closed low power relay 62 which is driven to the open state to open the short circuit switch device 52 (see Fig. 9).

The relay 62 ensures galvanic insulation between the control logic and power circuits.
- COMM: once this signal is asserted, it actuates through a driver 163 a relay 64 that is driven to switch the state of the reversing switch device 45 (see Fig. 9). Here again the relay 64 ensures galvanic insulation between the control logic and power circuits.
- FAN: once this signal is asserted, it actuates, through a driver 93 and a galvanic insulation relay 94, the cooling fan 92 (see Fig. 9).

Figure 11 shows the drive circuits of the switch devices 36, 38 of the converter unit 35 (see Fig. 9) and more in detail the preferred structure of these devices.

The switch 36 is composed of two series-connected IGBTs A1, A2, with opposed conduction directions, each having an antiparallel-connected diode associated therewith, as already shown in Figure 4.

The switch 38 has an identical structure, and is composed of two series-connected IGBTs B1, B2, with opposed conduction directions, each having an antiparallel-connected diode associated therewith.

An OR logic element 65 receives the V- and PPWM signals at its input and generates an ONA1 signal, which is applied to the input of an optoisolator 66.

The output of the optoisolator controls the IGBT A1 to close into conduction by means of a driver 67, when the latter is enabled by an ENA signal applied to a control input. The ENA signal is obtained from the above mentioned DREVA signal, through an optoisolator 68.

Similarly, the IGBT A2 is controlled to close by either the V+ or the PPWM signal or both, applied to the input of an OR 69, whose ONA2 output controls, through an optoisolator 70, a driver 71, also enabled by the ENA signal. The output of the driver 71 is connected to the control port of the IGBT A2.

The IGBT B1 is controlled to close by either the V- or the NPWM signal or both, applied to the input of an OR 72, whose ONB1 output controls a driver 74 of the IGBT B1 through an optoisolator 73, said driver being enabled by an ENB signal obtained from DRENB through an optoisolator 75.

Similarly, the IGBT B2 is controlled to close by either the V+ or the NPWM signal or both, applied to the input of an OR 76, whose ONB2 output controls, through an optoisolator 77, a driver 78 of B2, enabled by ENB.

The use of ENA, ENB signals to enable the IGBTs allows continuous uninterrupted generation of PPWM and NPWM signals, even when the IGBTs can or must be held open, for power saving or safe operation reasons, as better explained below.

The generation of PPWM and NPWM signals is thus simplified, which signals may be obtained by a dedicated timer unit (three of such units being available in the microprocessor) by varying the duty cycle, as imposed by regulation needs, at the start of a period of the line frequency, to prevent the insertion of any continuous component into the primary winding of the regulation transformer.

It will be easily appreciated from the above that, when the voltage half-wave applied to the AC-to-AC converter unit is positive (V+ asserted), then the IGBTs A2 and B2 will be in the conducting state and allow current to flow from the inductor to the phase F, as well as from the neutral N to the inductor, whereas the IGBTs A1 and B1, alternately intermittently triggered into conduction by PPWM and NPWM, will allow current to flow from the phase F to the inductor 39 or from the inductor 39 to the neutral N.

In order to avoid short-circuits between the phase and the neutral as the IGBTs A1 and B1 are switched, the PPWM signal is asserted with a certain delay with respect to the NPWM deassertion and deasserted with a certain advance with respect to NPWM assertion, to ensure that B2 shall be open when A1 is closed and that A1 shall be open when B1 is closed.

Similarly, when the voltage half-wave applied to the converter unit is negative (V- asserted), then the IGBTs A1 and B1 will be in the conducting state and allow current to flow from the phase F to the inductor 39, as well as from the inductor to the neutral N, whereas the IGBTs A2 and B2, alternately intermittently triggered into conduction by PPWM and NPWM, will allow current to flow from the inductor 39 to the phase F and from the neutral N to the inductor 39.

This switch driving arrangement always provides a closed circuit which allows the current in the inductor to keep on circulating and run out without developing any overvoltage.

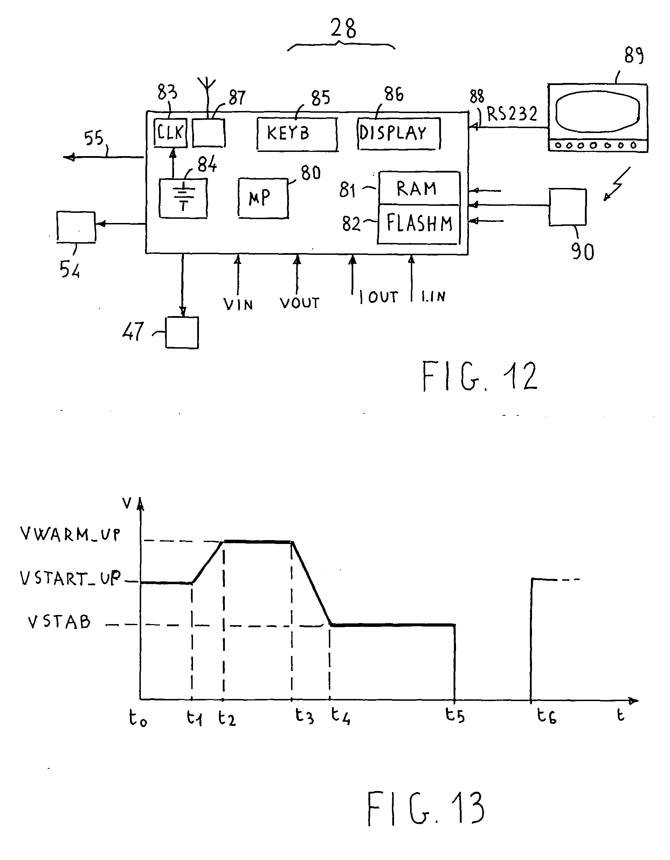

As a complement to the description of the system of Figure 9, Figure 12 schematically shows the structure of the supervision unit 28 with certain peripheral units associated therewith.

The supervision unit 28 essentially comprises a microprocessor 80, a read/write working RAM memory 81, a rewritable permanent FLASHM memory 82, a calendar clock/astronomical clock CLK 83 with an associated buffer battery 84, a control keyboard KEYB 85, a liquid crystal alphanumeric information display 86, a GSM radio transceiver 87 for communication with a remote supervision unit and a plurality of input/output ports, particularly including a serial communication port, e.g. of RS232 type, for connection to a PC 89, through which working programs or updates may be loaded into the memory 82 and data accumulated during system operation (history) may be downloaded by the memory.

Additional input/output ports are provided for connection to external luminosity sensors 90, for communication with the power module (channel 55), for control of the bypass switch 54 (see Fig. 9) and the load insertion contactor 47, and for monitoring the line voltage (Vin), the regulated output voltage Vout and the load current Il.

Before analyzing a typical case of an ignition/extinction cycle for a set of lamps controlled by the regulating system (which has been conceived particularly, but without limitation, for this type of application), the advantages provided by this system will be set forth, as compared with the prior art.

Let us consider Figure 9.

Assuming, for instance, that the line voltage is 230 V (effective value) and that the transformer 43 is connected to the converter unit 35 for step down regulation and has a primary to secondary turns ratio of 4, the system provides a step down regulation range of about 56 V (with 230-5=225 V being the maximum effective voltage applied to the primary of the transformer).

For an equivalent system, designed as disclosed in US 6,020,726 (a converter with an H-bridge), the regulation range would be slightly lower, i.e. about 55 V.

The reduction of harmonic current distortion and power dissipation across conducting switches is much more significant: it is reduced to one half (or 1/4 as compared with direct regulator systems, as disclosed by IT1324978).

The regulation range may be increased with respect to line voltage in step-up fashion, by simply switching the connection of the primary of the transformer to the converter unit 35 by actuating the reversing switch 45.

This may be done anytime if the regulator system is in no-load operation.

However, if this has to be done with power being supplied to the load, then the voltage applied to the LC filter 39, 41 shall be reduced to zero by closing the switch 38 (switches B1 and B2 of Figure 11) with a 100% duty cycle of the NPWM, i.e. in a continuous manner.

It shall be noted that, in this state, an induced voltage (incidentally having a square wave) caused by mutual inductance of the two windings and equal to the voltage drop (3ö5V) in the switch 38, is always present at the output of the converter unit.

Now, the bypass or short circuit switch device 52 is controlled to the closed state.

If the switch is of the electromechanical type, the terminals of the winding 44 will be actually shorted.

If fast operation and automatic opening requirements impose the use of an electronic switch 52, e.g. composed of two antiparallel-connected TRIACs, the voltage at the ends of the primary 44 will be anyway reduced (to about 2ö3V).

Under these conditions, it will be possible to actuate the reversing switch 45, then open the switch 52 and start regulation by varying the closing duty cycle for the switches 36, 38 as needed.

It shall be understood that these two steps have a very short duration, of the order of 20 ms, during which the actuation of the switches 36, 36 may be temporarily locked by only deasserting the ENA and ENB signals (see Fig. 11).

Concerning this aspect, a few considerations should be developed: the system of Figure 9 allows substantially continuous regulation of the voltage applied to the load (the duty cycle may be defined by 10 bit or even more) over a regulation range of 56 V but, relative to the line voltage, due to the voltage drop across solid state switches, regulation has some discontinuity in the proximity of the line voltage.

That is a step down regulated voltage will be obtained from the line voltage (230 V rated), which differs from the latter by ΔV/N, where ΔV=3ö5V is the voltage drop in the switches and N is the turns ratio. Therefore, in this example ΔV/N≈0,75ö1,25V.

It shall be further noted that the use of a pair of TRIACs to form the switch 52 can reduce such discontinuity.

This is because the voltage drop across the TRIACs causes a voltage drop across the primary of the transformer (with N=4) of about 0,5ö0,75V, wherefore regulation discontinuity is reduced to 0,25ö0,5V.

This problem does not arise once the reversing switch 45 has been actuated and the bypass switch 52 has been opened:
step up voltage regulation occurs continuously from the line value decreased by the voltage drop across the switches reflected in the secondary to the extent determined by the turns ratio.

Accordingly, the use of TRIACs to form the bypass switch 52 is particularly advantageous for this aspect, in addition to their automatic extinction and fast operation features.

It shall be noted that the short circuit switch 52 provides an advantage that is even more important than allowing actuation of the switch 45 when no or almost no voltage is present on the output terminals being switched. In this respect, it will be appreciated that the switch 45 may be also disposed upstream from the AC-to-AC converter unit 35, in which case by simply opening the switch 36, as controlled by ENA deassertion, switching may occur with no voltage applied to the terminals and no circulating current, hence with no electric arc being formed.

The short circuit switch is essentially used to ensure that if the switches 36, 37 fail to close, due to electric failure, the primary winding will constitute an open circuit.

Under this conditions, the transformer 43 will act as a simple inductor connected in series with the load, and cause a considerable voltage drop (100ö200V), variable as a function of load current, with disadvantageous consequences for the load (extinction of the set of lamps) and hazardous overvoltages applied by mutual inductance to the converter unit 35.

Figure 13 is an exemplary time diagram of a typical ignition/extinction cycle for a set of lamps that may be controlled by the system of Figure 9;

For proper lamp ignition, a striking potential VSTART_UP shall be applied, from 200 to 230 V, for a time t0,t1 of 1 to 3 minutes.

Then the supply voltage shall be gradually and seamlessly increased to a maximum value of 200 to 230 V, corresponding to a warm-up voltage VWARM_UP.

During the interval t1,t2, the slope of the voltage increase ramp shall not exceed 50 V/min.

According to the type of lamps, the warm-up time may be of 1 to 60 minutes.

Finally, during an interval t3,t4, with a relatively slow descending ramp, having a ramp slope not exceeding 50 V/min, preferably much lower and of the order of 1ö5V/min, voltage shall reach the optimal stabilized value VSTAB, of the order of 170ö190V, variable according to the light emission intensity required from the lamps, which value is maintained and regulated throughout the time interval in which the lamps are required to be on.

At the end of the cycle, the lamps will be extinguished and before being ignited again, they shall be cooled, for a time t5,t6 of 1 to 15 minutes.

All these parameters (ignition time, voltages, duration of intervals, ramp slopes, extinction times and working cycles) are stored in the FLASH memory 82 of the supervision unit and may be updated anytime, even without stopping the operation controlled by the supervision unit, with a swapping technique (data storing in an idle area of the memory and transfer to the operating area as soon as possible, or even at a specified date and time, without interfering with the control operation in progress).

It shall be particularly noted that the power module can autonomously handle the basic voltage regulation and failure response operations.

Updates may be carried out using a personal computer 89 (see Fig. 12) connected to the supervision unit, or even from a remote station, via the GSM transceiver 87 contained in the supervision unit.

The above description of a typical working cycle clearly shows that such cycle does not require the load to receive voltages higher than the line voltage, as long as the latter is guaranteed by the provider, which makes the reversing switch 45 unnecessary: the latter may be provided as an additional optional for particular conditions and usages, and may be replaced by direct connection bridges between the output of the converter unit 35 and the terminals of the primary winding 44 of the transformer 43.

Also, these bridges will allow the system to be configured for either step down or step up regulation.

The individual events associated with the execution of the above cycle will be now described in greater detail.

At a time t0, corresponding to a predetermined ignition time, and identified by comparison of the "ignition time" parameter stored in the supervision unit 28 with the current time as defined by the calendar/astronomic/clock 83 (see Fig. 12) or as soon as the luminosity probes 90 detect an insufficient light condition, the supervision unit 30 will transmit an ignition control to the secondary control unit 31, indicating the VSTART_UP striking potential (200ö230V by way of indication) with which the load has to be supplied, and the ramp slope to be used in voltage regulation.

The secondary control unit 31 actuates the bypass switch 52 to an open state and the converter unit 35 measures the output voltage of the power module and, by varying the duty cycle of switches, sets the output voltage of the power module to the desired value START_UP.

Then it informs the supervision unit 28 that the instructions it received have been followed.

The supervision unit in turn controls the electromechanical contactor 47 into the closed state, so that the load can be powered.

If the load current causes a voltage drop in the power line, then the power module automatically will reset the output voltage to the desired value.

It shall be incidentally noted that certain types of lamps (of halogen type) have a very high starting current (up to a multiple of the steady-state current) for a duration of a few seconds.

Therefore, if the secondary control unit that monitors the load current by the transformer 50A or, even better, the current supplied to the converter unit 35 by the transformer 50 ascertains that the starting current exceeds a safety limit for operation of the switches 36, 38, then it will automatically close the bypass switch 52 and prevent operation of the switches 36, 38 by simply deasserting the ENA, ENB signals.

In this case, the event is communicated to the supervision unit 28.

Nevertheless, it shall be apparent that this problem may be foreseen and solved beforehand by employing, instead of one contactor 47, a plurality of contactors, which are actuated in an appropriate sequence by the supervision unit 28, and each of which supplies power to a fraction of the load.

The bypass switch 52 may be closed and the switches 36, 38 may be cutoff automatically by the auxiliary control unit 31 should unacceptable overheating of the switches 36, 38 be ascertained by the temperature sensor 81 (see Fig. 9).

Once the start has terminated, after a programmed time interval t0, t1, the supervision unit 28 instructs the auxiliary control unit 31 to change the output voltage of the power module, with a ramp of predetermined slope (interval t1,t2) to a warm-up value VWARM_UP that must be maintained for a predetermined time interval t2,t3.

The auxiliary control unit acts accordingly, by confirming that the received instructions have been followed, and starting a timer to define the duration of the time interval t2,t3.

In other words, the duration of the various time intervals may be controlled by both units, i.e. the supervision unit and the secondary control unit, with a redundancy that enhances operation safety.

Once the warm-up step has been completed, the supervision unit instructs the secondary control unit for the latter to reduce the voltage to a holding value VSTAB which ensures the required luminous efficiency with a lower absorbed power. This operation is carried out with a ramp slope selected by the supervision unit. Then, the voltage is either maintained or changed as needed, as long as the lamps are required to be held in an ignited state.

Finally, the ignition cycle terminates (instant t5) when the contactor/contactors 47 are opened by the supervision unit 28, and when an instruction is simultaneously transmitted to the secondary control unit 31, for turning off the converter unit 35.

It shall be noted that, during the ignition cycle, the two control units periodically ensure a check of their mutual status by exchanging messages.

Therefore, when no messages are transmitted by the supervision unit for a predetermined time, or no reply is given to warnings or alarms, the secondary control unit 31 will autonomously set a minimum safety voltage, lower than the line voltage and sufficient to hold the set of lamps in an on state.

On the other hand, if the supervision unit ascertains an abnormal operation of the power module, including the case in which the secondary control unit fails to reply to the transmitted messages, it may decide to switch off the power module, by closing the bypass circuit 53, i.e. by actuating the contactor 54 and opening the contactor 47.

In other words, the use of two intelligent and somewhat autonomous control units allows the system to ensure the highest operation safety and reliability in a variety of circumstances, to fulfill various requirements.

Another problem will be now described in greater detail, which occurs when the regulator system as described above finds application for optimized control of lighting fixtures and the like.

If safety reasons, considering that the line voltage may have fluctuations of the order of ±10% of the 230V rating, impose a range of regulated voltage ratings from 160 V to 250 V (to account for the deviations of the line voltage from its rated value), then the required regulation range will be asymmetric with respect with the rated line voltage value: there should be voltages decreasing by 0 to 60 V relative to the rated line voltage and voltages increasing by 0 to 20 V, still relative to the rated line voltage.

Conversely, due to the use of the reversing switch 45, the regulation range of the present system is symmetric with respect to the line voltage.

For instance, if the turns ratio of the series-connected regulating transformer 43 is 3.5, the regulation range will be approximately 165ö295V.

Most of the increasing regulation range (250ö295V) is unused.

In view of optimizing the system, an autotransformer may be added to the system, as described in EP1318702, upstream from the regulating transformer, which autotrasformer provides at its output a lower voltage corresponding to the average value of the regulating voltage, i.e. 205ö210V.

This arrangement affords the advantage that, using regulating transformer with a higher turns ratio (6, by way of indication) the desired, symmetric regulation range (165ö250V) is achieved, with lower harmonic distortion and power dissipation.

Nevertheless, this requires the use of a additional element (autotransformer) which is relatively bulky and expensive.

This approach may become technically and economically advantageous if the autotransformer is assigned the double task of obtaining a voltage lower than the network voltage, i.e. 210 V, to fully exploit the symmetric regulation range and also a voltage to be supplied to the converter unit 35 that is higher than the rated line voltage, e.g. 300ö400V.

Thus the required regulation range of 170ö250V may be obtained by a series-connected regulating transformer with an even higher turns ratio (up to 10), involving a further reduction of harmonic distortion and power dissipation.

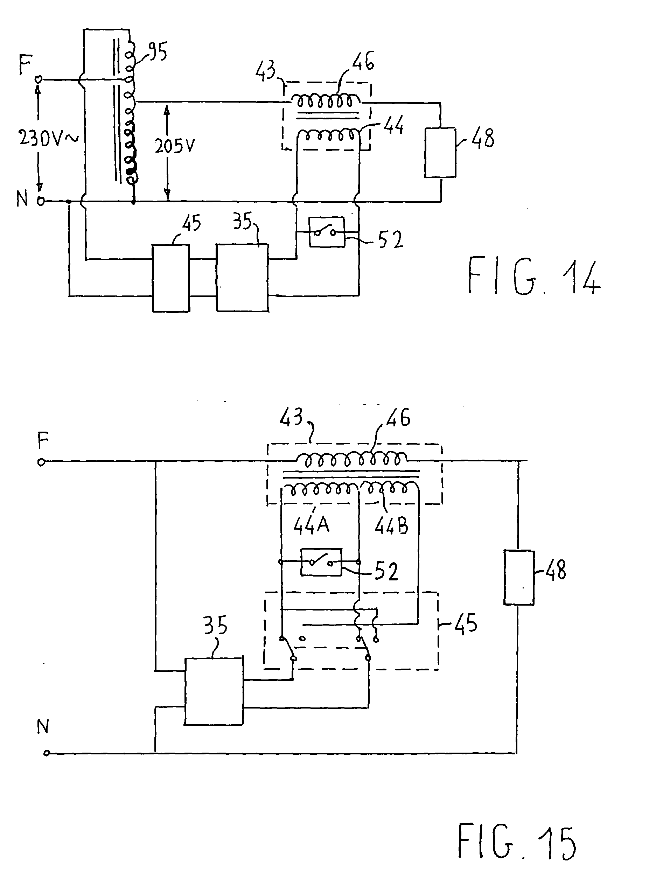

One embodiment of this type is schematically shown in Figure 14, where the autotransformer 95, connected between the phase F and the neutral N of the power line provides at its output a first voltage of the order of 210 V to be supplied to the series of the load 48 and secondary 46 of the regulating transformer 43 and a second voltage, higher than the line voltage and of the order of 300ö400V, to be supplied to the AC-to-AC converter unit 35, with the reversing switch 45 located upstream (as shown) or downstream therefrom.

As shown in the schematic view of Figure 9, a switch 52 ensures the short circuit of the primary 44 of the transformer 43.

It should be pointed out that substantial advantages will be also achieved by a compromising solution, i.e. by assigning to the autotransformer 95 of Figure 14 a higher voltage than the network voltage to be supplied to the converter unit 35, while leaving the load supply voltage unchanged.

In this case, the autotransformer may be designed to be only able to provide the regulating power, i.e. only a fraction of the power delivered by the system, and may be thus provided in compact and inexpensive form.

As an alternative to this approach, the scheme as shown in Figure 9 may be changed in its essential parts, into the scheme of Figure 15.

In Figure 15, the primary winding of thetransformer 43 is composed of two branches 44A and 44B connected in series.

The short circuit switch 52 is connected either in parallel to the series of the two branches 44A and 44b or in parallel to one of the two branches.

The reversing switch is connected to the primary winding so that, in one position of the switch, the output regulating voltage of the converter unit 35 will be applied to the branch 44A for step down regulation, whereas in the other position of the switch, the output regulating voltage of the converter unit will be applied, after phase reversal, to the series of the two branches 44A AND 44B for step up regulation.

The branch 44A has a turns ratio with the secondary winding 46 of 3.7.

The series of the two branches 44A and 44B has a turns ratio with the secondary winding 46 of 10.

Thus the output voltage of the system undergoes a step down regulation in a range from 170 to 230 V and a step up regulation in a range from 230 to 250 V.

This solution affords substantial advantages: when the voltage to be delivered is higher than the line voltage (and hence the load current is also higher), the harmonic distortion and the power dissipation introduced by the converter unit are considerably reduced as a function of the higher turns ratio.

Furthermore, the short circuit switch 52 is less subjected to current stress.

It shall be understood that this solution may be also provided in combination with the use of an autotransformer, which is only used to raise the supply voltage of the converter unit, as described above.

Reference has been made herein to a single-phase regulator system, i.e. supplied with a single phase of the line voltage. Nevertheless, it shall be understood that the above system may be provided as a three-phase system, i.e. having three power modules 30, each supplied with one phase of a three-phase power line.

In this case, one supervision unit may control the three power modules, even when they have different working cycles, as well as their respective load insertion and bypass contactors (one for each phase).

## Claims

**1.** A programmable AC voltage regulator and stabilizer system, particularly for optimized control of a load consisting of fluorescent lamps and the like, comprising:
- a supervision unit (28) based on a microprocessor (80),
- sensors for detecting the AC mains voltage and the regulated output voltage (49),
- a power module (30) controlled by said supervision unit (28) and supplied with said mains, which delivers a regulated load supply voltage, **characterized in that** said power module (30) comprises:
- an AC-AC converter unit (35) supplied with said mains, consisting of a pair of solid state bidirectional switches (36, 38) and an output LC filter (39, 41),
- a transformer (43) with its primary winding (44) connected to the output of said converter unit (35) and its secondary winding (46) connected in series with the load (48), and
- a secondary control unit (31) which controls said bidirectional switches (36, 38) to periodically close in a complementary, mutually exclusive manner, according to the desired output voltage of the system, as set in said secondary unit (31) by said supervision unit (28) and according to the current output voltage of the system, as measured by said output voltage sensor (49), with a frequency of more than 10 KHz and a duty cycle related to the desired output voltage of said system.

**2.** A system as claimed in claim 1, wherein each of said solid state bidirectional switches (36, 38) is composed of a pair of series-connected IGBTs (A1,A2,B1,B2), with opposed conduction directions, each IGBT having an antiparallel-connected diode associated therewith.

**3.** A system as claimed in claim 1 or 2, wherein said bidirectional switches (36, 38) are controlled to the closed state by a pair of signals (V+,V-, PPWM, NPWM) only upon assertion of an enabling signal (ENA,ENB) generated by said secondary control unit (31).

**4.** A system as claimed in any preceding claim, wherein said power module (30) comprises a normally closed short circuit switch (52) for shorting the primary winding (44) of said regulating transformer (43), said switch (52) consisting of a pair of antiparallel-connected solid state switches (TRIACs) and being controlled into the open and closed states by said secondary control unit (31).

**5.** A system as claimed in claim 4, wherein said power module comprises a temperature sensor (91) and wherein, if the detected temperature is higher than a predetermined value, said secondary control unit (31) controls said short circuit switch into the closed state.

**6.** A system as claimed in claim 4 or 5, wherein said power module (30) comprises an electromechanical reversing switch (45) for reversing the connections between said converter unit (35) and the primary winding (44() of said regulating transformer (43) or between said converter unit (35) and its supply voltage.

**7.** A system as claimed in claim 6, wherein said reversing switch is disposed electrically downstream from said converter unit (35) and wherein the primary winding (44) of said transformer (43) is composed of two series-connected winding branches (44A, 44B) and said reversing switch (45) connects the output of said converter (35) to one winding branch (44A) for step down regulation and, upon switching, it reversely connects the output of the converter unit (35) to the series of the two winding branches (44A, 44B), for step up regulation within a smaller regulation range.

**8.** A system as claimed in any preceding claim, wherein said secondary control unit (31) comprises a microprocessor (56) having a serial communication port (55) for communication with said supervision unit (28), which microprocessor (56), upon failure to receive a reply to its messages transmitted to said supervision unit (28), imposes to said regulator system a regulated output voltage at a predetermined safety value lower than said line voltage.

**9.** A system as claimed in claim 7, wherein said predetermined safety value is preset in said microprocessor (56), according to instructions received from said supervision unit (28) and, failing this, it assumes a predetermined default value.

**10.** A system as claimed in any preceding claim, wherein said supervision unit comprises a portion of writable memory (82) acting as a buffer and a communication port (87, 88) for wired and/or wireless communication with a remote control unit for updating and changing the working cycles of said system.

**10.** A system as claimed in any preceding claim, comprising a bypass circuit (53, 54) of said power module (30) controlled by a normally open contactor (54) which is closed by a control of said supervision unit (28), which contactor opens when there is no such control signal.

**11.** A system as claimed in any preceding claim, comprising an autotransformer (95) supplied with the mains and having an output socket for delivering a voltage higher than the line voltage to be supplied to said converter unit (35).

**12.** A system as claimed in claim 11, wherein said autotransformer (95) has a second output socket for delivering a voltage lower than the line voltage to be supplied to a load through the secondary (46) of said regulating transformer.
